# EUROPÄISCHE PATENTANMELDUNG

(11) **EP 0 802 465 A2**
(43) Veröffentlichungstag der Anmeldung: **22.10.1997**
(21) Anmeldenummer: 97103084.6
(22) Anmeldetag: 26.02.1997
(51) Int. Cl.: G05B 19/042

(54) **Elektrisches Hausgerät**

(30) Priorität: 20.04.1996 DE 19615840
(71) Anmelder: ROBERT BOSCH GMBH, 70442 Stuttgart (DE)
(72) Erfinder: Klausner, Markus, 09112 Chemnitz (DE)

(57) **Zusammenfassung**

Es wird ein elektrisches Hausgerät (14), wie ein Geschirrspüler, ein Wäschetrockner, eine Waschmaschine, eine Beleuchtungseinrichtung, eine Heizungssteuerung oder dergleichen vorgeschlagen, das über eine am oder im Hausgerät angeordnete Schnittstelle an ein zu mehreren Hausgeräten geführtes, von einem einzigen zentralen Steuerrechner (17) steuerbares Bussystem anschließbar ist, wobei die Schnittstelle mit einem Busanschlußbaustein zur Übertragung von Steuerbefehlen und/oder Steuersignalen zwischen dem Bussystem und dem Hausgerät (14) verbunden ist. Das Hausgerät (14) ist mit einem Steckplatz (18) zum lösbaren Anstecken des Steuerrechners (17) versehen. Eine die Verbindung des angesteckten Steuerrechners (17) mit der Schnittstelle herstellende Kontaktanordnung (19) ist am Steckplatz (18) angeordnet. Da der Steuerrechner (17) auch an Steckplätzen anderer am Bussystem angeschlossener Hausgeräte angesteckt werden kann, wird eine große Flexibilität erreicht. Durch Umstecken des Steuerrechners (17) kann die gesamte Anlage daher von verschiedenen Stellen aus gesteuert werden. Der Steuerrechner benötigt dabei keinen besonderen Platz, sondern ist im eingesteckten Zustand in einem der Hausgeräte integriert.

## Beschreibung

### STAND DER TECHNIK

Die Erfindung betrifft ein elektrisches Hausgerät, wie einen Geschirrspüler, einen Wäschetrockner, eine Waschmaschine, eine Beleuchtungseinrichtung, eine Heizungssteuerung oder dergleichen nach der Gattung des Hauptanspruchs.

Aus der Zeitschrift Elektronik 18/1995 "Das vernetzte Eigenheim", Meinrad Happacher, S. 50 bis 58, ist es bekannt, mehrere oder alle elektrische Hausgeräte an einen Hausbus bzw. Datenbus anzuschließen, wobei zur zentralen Steuerung dieser Hasugeräte ein Personalcomputer (PC) ebenfalls an diesen Hausbus angeschlossen ist. Ziel einer solchen zentralen Steuerung der Hausgeräte ist es, die Ökologie, die Ökonomie und die Sicherheit bei der Hausarbeit zu erhöhen und gleichzeitig eine Entlastung von Routinetätigkeiten zu erreichen. Durch eine intelligente Steuerung sollen insbesondere Einsparungen bei der Wärmeversorgung und Wasserversorgung und durch die Nutzung von zeitvariablen Tarifen erreicht werden. Gleichzeitig soll auch die Sicherheit und Funktionssicherheit erhöht werden, wobei beispielsweise Sensoren zum Schutz gegen Feuer, Gas- und Wasseraustritt ständig überwacht werden können. Nachteilig an einem derartigen System ist der relativ hohe Investitions- und Installationsaufwand und die häufig vorhandene Abneigung der Betreiber der Hausgeräte, sich mit einem PC zu befassen. Darüber hinaus fehlt es häufig an anwenderfreundlicher Software, so daß von vorneherein Vorbehalte gegen die Anschaffung eines solchen Systems bestehen.

### VORTEILE DER ERFINDUNG

Das erfindungsgemäße elektrische Hausgerät mit dem kennzeichnenden Merkmal des Hauptanspruchs hat demgegenüber den Vorteil, daß es an ein solches Haus-Bussystem angeschlossen werden kann, jedoch nicht angeschlossen werden muß. Ein PC als Steuerrechner entfällt, und der an einen Steckplatz des Hausgeräts angepaßte Steuerrechner kann dort oder in einem beliebigen anderen Hausherät angesteckt werden, das ebenfalls einen solchen Steckplatz besitzt. Der Ort der zentralen Steuerungsmöglichkeit ist daher frei wählbar und jederzeit bequem veränderbar, was zu einer wesentlich größeren Flexibilität führt. Der Steuerrechner braucht also lediglich aus dem Steckplatz eines Hausgeräts herausgezogen und an den Steckplatz eines anderen Hausgeräts angesteckt werden, das vielleicht zur zentralen Steuerung eine günstigere Position besitzt. Die mit einer PC-Bedingung verbundene Hemmschwelle, insbesondere die Notwendigkeit der Erfahrung im Umgang mit MS-WINDOWS-Applikationen wird durch einen solchen anwendungsadaptierten Steuerrechner überwunden, der beispielsweise direkt die wichtigsten Funktionstasten enthalten kann und nur für diese vorgesehene Anwendung ausgelegt zu sein braucht. Die Wahl des Umfangs und des Komforts einer solchen zentralen Steuerungsmöglichkeit ist völlig frei und variabel. Um mit geringen Anfangsinvestitionen in ein solches vernetztes System einsteigen zu können, können beispielsweise zunächst solche Hausgeräte ohne Bussystem und ohne Steuerrechner betrieben werden, der dann zu einem späteren Zeitpunkt angeschafft werden kann und dann lediglich an einen Steckplatz angesteckt werden muß. Das Bussystem kann nachträglich installiert werden, beispielsweise durch Verlegung von Leitungen an Wänden oder in Leerrohren oder können beim Hausbau in kostengünstiger Weise schon urspünglich konzipiert sein und erst später nach dem Kauf eines Steuerrechners in Betrieb genommen werden, wenn genügend entsprechende Hausgeräte vorhanden sind. Die Anordnung, Art und Anzahl der Hausgeräte ist nahezu beliebig wählbar, so daß das konzipierte System sehr variabel ist. Es muß kein Platz für einen Steuerrechner vorgesehen werden, da dieser in variabler Weise in verschiedene Hausgeräte eingesteckt werden kann.

Durch die in den Unteransprüchen aufgeführten Maßnahmen sind vorteilhafte Weiterbildungen und Verbesserungen des im Hauptanspruch angegebenen Hausgeräts möglich.

Der Steckplatz einen Hausgeräts ist vorzugsweise als Einsteckschacht ausgebildet, in dem der Steuerrechner nach dem Einschieben geschützt und integriert angeordnet ist. Das Schachtende im Inneren des Hausgeräts ist dabei zweckmäßigerweise mit der Kontaktanordnung der Schnittstelle versehen, so daß beim Einschieben des Steuerrechners automatisch die Verbindung mit der Schnittstelle und Stromversorgungsanschlüssen hergestellt ist.

Wird das Hausgerät nicht mittels eines Steuerrechners betrieben oder befindet sich dieser in einem anderen Hausgerät, so dient eine Schachtabdeckung in vorteilhafter Weise zum Verschließen des Einsteckschachts.

Um den Steuerrechner auch im nicht eingesteckten Zustand nutzen und bedienen zu können, z. B. auf dem Küchentisch, ist ein Adapterkabel zur Verbindung des nicht am Steckplatz angeordneten Steuerrechners mit der Kontaktanordnung am Steckplatz vorgesehen.

Eine große Variabilität wird dadurch erreicht, daß der wahlweise an verschiedenen Hausgeräten ansteckbare Steuerrechner zur Steuerung aller an das Bussystem angeschlossener Hausgeräte ausgebildet ist, daß diese jedoch auch zusätzlich mit konventionellen Bedienelementen, wie Schalter, Tasten, Drehknöpfe oder dergleichen zur vom Steuerrechner unabhängigen Bedienung versehen sind, so daß jedes Gerät konventionell bedient werden kann, unabhängig davon, ob es am Bussystem angeschlossen ist oder nicht.

Der modular ausgebildete Steuerrechner besitzt insbesondere ein LC-Display und/oder eine Funktionstasten aufweisende numerische Tastatur und/oder eine Infrarot-Empfangseinrichtung und/oder eine synthetische Sprachausgabeeinrichtung. Durch diese modulare Ausrüstung können beliebige Kombinationen dieser Funktionseinheiten oder eine Vollversion gewählt werden, so daß auch hier die Investitionskosten variabel wählbar sind.

Zur drahtlosen Fernbedienung ist zweckmäßigerweise eine Infrarot-Handbedienung zur Steuerung und Kommunikation mit der IR-Empfangseinrichtung des Steuerrechners vorgesehen. Dabei besitzt der Steuerrechner vorzugsweise einen Infrarot-Dekoder zur Umsetzung der Signale der Infrarot-Empfangseinrichtung in Bustelegramme.

In vorteilhafter Weise kann der Steuerrechner auch noch mit einer Einrichtung zur Funktionsüberprüfung, Diagnose und Fehlersuche aller an das Bussystem angeschlossener Hausgeräte versehen sein.

Um keine Daten beim Positionswechsel des Steuerrechners von einem Hausgerät zu einem anderen Hausgerät zu verlieren, ist der Steuerrechner in vorteilhafter Weise mit einer Speicherbatterie oder einem Speicherkondensator zur Datensicherung ausgerüstet.

Die Busanschlußbausteine in den einzelnen Hausgeräten sind mit Sensoren und/oder Aktoren des jeweiligen Hausgeräts verbunden, damit Sensorsignale zum Steuerrechner und Steuersignale von diesem zu den Aktoren des Hausgeräts übermittelt werden können, die die gewünschte Steuerung des Hausgeräts bewirken.

Als Bussystem eignet sich insbesondere das EIB(European Installation Bus)-Bussystem.

### ZEICHNUNG

Ein Ausführungsbeispiel der Erfindung ist in der Zeichnung dargestellt und in der nachfolgenden Beschreibung näher erläutert. Es zeigen:
- Figur 1: eine schematische Darstellung mehrerer an ein Bussystem angeschlossener Hausgeräte,
- Figur 2: eine perspektivische Darstellung eines als Geschirrspüler ausgebildeten Hausgeräts mit einem Einsteckschacht für einen ebenfalls perspektivisch dargestellten Steuerrechner, und
- Figur 3: eine Schachtabdeckung zum Verschließen des Einsteckschachts bei Abwesenheit des Steuerrechners.

### BESCHREIBUNG DES AUSFÜHRUNGSBEISPIELS

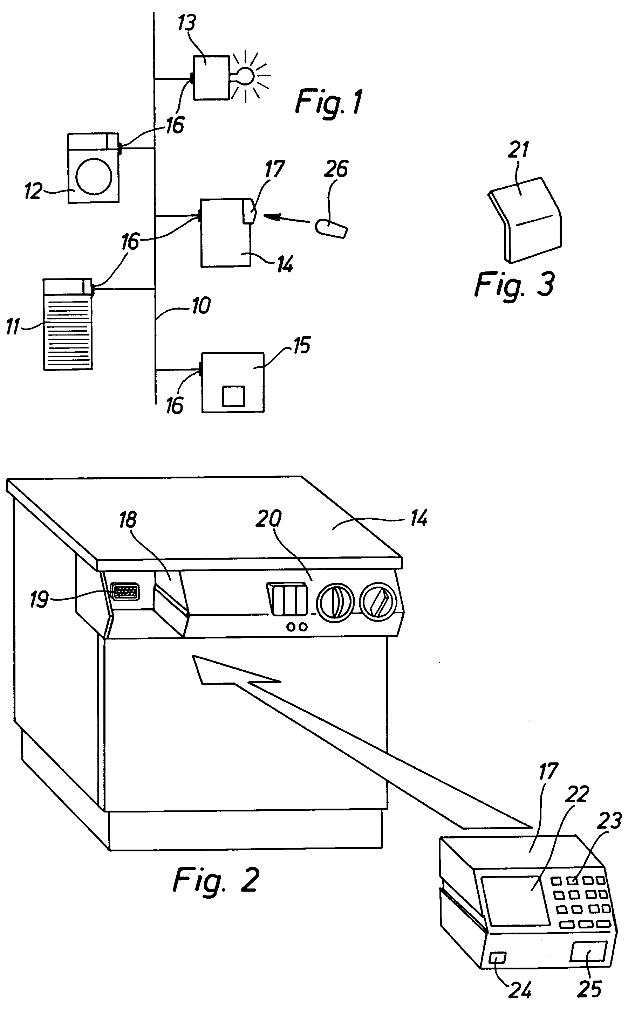

Gemäß Figur 1 sind fünf elektrische Hausgeräte an ein Bussystem 10 angeschlossen, bei dem es sich um einen Datenbus handelt, der beispielsweise als genormter EIB (European Installation Bus) ausgebildet ist. Selbstverständlich können auch andere bekannte Bussysteme hierzu verwendet werden, z. B. Bati-Bus, EHS, LON, CEBus, HBS oder dergleichen. Bei den fünf angeschlossenen Hausgeräten handelt es sich um eine Rolladensteuerung 11, eine Waschmaschine 12, eine Beleuchtungseinrichtung 13, ein Geschirrspüler 14 und eine Heizungssteuerung 15 einer Heizanlage. Selbstverständlich können diese Hausgeräte auch mehrfach oder noch weitere Hausgeräte am Bussystem 10 angeschlossen sein, beispielsweise ein Wäschetrockner, eine Alarmanlage, eine Lüftungsanlage, eine Telefonanlage oder dergleichen. Das Bussystem 10 ist beispielsweise in einem Privathaus oder einer -wohnung installiert, jedoch ist prinzipiell auch eine Installation in anderen Gebäuden möglich.

Der Anschluß der elektrischen Hausgeräte 11 - 15 an das Bussytem 10 erfolgt jeweils über eine Schnittstelle 16, durch die die Verbindung jeweils mit einem nicht dargestellten Busanschlußbaustein im jeweiligen Hausgerät erfolgt. An diesem Busanschlußbaustein sind die für das jeweilige Hausgerät erforderlichen Aktoren und Sensoren angeschlossen, wobei Steuerbefehle vom Bussystem 10 aus den Aktoren zugeführt werden, während die Sensoren über den Busanschlußbaustein und die Schnittstelle 16 ihre Signale an das Bussystem 10 abgeben.

Zum Empfang und zur Verarbeitung der an das Bussystem 10 abgegebenen Sendersignale dient ein zentraler Steuerrechner 17. Dieser erzeugt auch die erforderlichen Steuerbefehle für alle an das Bussystem 10 angeschlossenen Hausgeräte. Dieser Steuerrechner 17 ist beim dargestellten Ausführungsbeispiel in einem Einsteckschacht 18 des Geschirrspülers 14 positionierbar bzw. einsteckbar, wobei der Einsteckschacht 18 und der Steuerrechner 17 in ihrer Gestalt so ausgebildet sind, daß der Steuerrechner 17 im eingesteckten Zustand mit der Außenwandung des Geschirrspülers 14 abschließt und nicht über diese herausragt. Die Verbindung mit dem Bussystem 10 erfolgt über eine Kontaktanordnung 19 an der inneren Endwandung des Einsteckschachts 18, wobei diese Kontaktanordnung 19 mit der Schnittstelle dieses Geschirrspülers 14 verbunden ist bzw. diese bildet. Beim Einschieben des Steuerrechners 17 in den Einsteckschacht 18 wird dadurch automatisch die elektrische Verbindung mit dem Bussystem hergestellt.

Anstelle eines Einsteckschachts 18 können prinzipiell auch andere Ausgestaltungen eines Steckplatzes für den Steuerrechner 17 am jeweiligen Hausgerät vorgesehen sein. Wesentlich ist es dabei, daß mehrere der am Bussystem 10 angeschlossenen Hausgeräte 10 - 15 einen derartigen Einsteckschacht 18 besitzen, so daß der Steuerrechner 17 aus dem einen Hausgerät herausgezogen und in ein anderes Hausgerät eingesteckt werden kann, ohne daß sich dabei Steuerfunktionen für die angeschlossenen Hausgeräte verändern würden. Der Steuerrechner 17 kann dadurch an der jeweils günstigsten Stelle positioniert werden und auch in seiner Position verändert werden, wenn sich eine andere Position als günstiger erweist.

Um beim Umstecken des Steuerrechners 17 keine Datenverluste in Kauf nehmen zu müssen, besitzt der Steuerrechner 17 einen Pufferspeicher, beispielsweise eine Speicherbatterie oder einen Speicherkondensator. Im eingesteckten Zustand wird er über die Kontaktanordnung 19 mit der erforderlichen elektrischen Energie versorgt.

Der Geschirrspüler 14 besitzt - wie auch die übrigen an das Bussystem 10 angeschlossenen Hausgeräte 11 - 13, 15 - zusätzlich noch die herkömmlichen Bedienungselemente 20, wie Tastschalter, Drehschalter, Kontrolleuchten und dergleichen, um die gewünschten Bedienungsfunktionen in der üblichen Weise ohne Einwirkung des Steuerrechners 17 vornehmen zu können. Dies bedeutet, daß alle an das Bussystem 10 angeschlossenen Hausgeräte 11 - 15 auch ohne Steuerrechner 17 betrieben werden können. Dies gestattet einen stufenweisen Aufbau der Gesamtanordnung mit zunächst niedrigeren Anfangsinvestitionen ohne Steuerrechner, der dann später hinzukommen kann. Die Steuerung erfolgt dann wahlweise manuell über die herkömmlichen Bedienungselemente 20 oder über den zentralen Steuerrechner 17.

Bei leerem Einsteckschacht 18 kann dieser durch die in Figur 3 dargestellte Schachtabdeckung 21 verschlossen werden, um zum einen die Kontaktanordnung 19 vor Verschmutzung und Beschädigung zu schützen und um weiterhin ein optisch ansprechendes Äußeres des Geschirrspülers 17 oder der sonstigen mit einem solchen Einsteckschacht 18 versehenen Hausgeräte zu erreichen.

Es ist auch möglich, die an das Bussystem 10 angeschlossenen Hausgeräte 11 - 15 mittels des nicht in einen Einsteckschacht 18 eingesteckten Steuerrechners 17 zu betreiben. Hierzu muß die Kontaktanordnung 19 eines der Hausgeräte über ein nicht dargestelltes Kabel mit dem Steuerrechner 17 verbunden werden, der dann auf einem neben dem Hausgerät angeordneten Tisch oder einer Konsole angeordnet sein kann.

Der in Figur 2 dargestellte Steuerrechner 17 ist modular ausgerüstet und besitzt ein LC-Display 22, eine numerische Tastatur 23 mit Funktionstasten, einen Infrarot (IR) -Empfänger 24 und einen Lautsprecher 25 für eine synthetische Sprachausgabe. Während die in Figur 2 dargestellte Vollversion alle diese Elemente enthält, können diese in einfacheren Versionen auch nur teilweise vorhanden sein, z. B. nur eine numerische Tastatur 23 oder nur ein IR-Empfänger 24, wobei dann die Steuerung über ein IR-Fernsteuergerät 26 erfolgt. Der IR-Empfänger 24 enthält dann einen IR-Dekoder zur Umsetzung der empfangenen IR-Signale in Bustelegramme.

Das Anwendungsprogramm im Steuerrechner 17 zur Steuerung und Abfrage der am Bussystem 10 angeschlossenen Aktoren und Sensoren in den einzelnen Hausgeräten kann beispielsweise auf einem nicht dargestellten Speicher, wie EPROM/EEPROM gespeichert sein. Die entsprechende Software ist so menügesteuert, daß die Bedienung mit der numerischen Tastatur 23 in Verbindung mit einigen Sondertasten in einfacher Weise möglich ist. Zusätzlich kann das Programm eine Funktionsüberprüfung, Diagnose und Fehlersuche in den an das Bussytem 10 angeschlossenen Hausgeräten durchführen, wodurch sowohl eine Fehleranzeige mit Hinweisen zur Fehlerbehebung durch den Kunden selbst, wie auch eine Ferndiagnose über ein Modem durch den Kundendienst möglich ist, sofern ein entsprechender Anschluß vorhanden ist.

## Patentansprüche

1. Elektrisches Hausgerät, wie Geschirrspüler, Wäschetrockner, Waschmaschine, Beleuchtungseinrichtung, Heizungssteuerung oder dergleichen, das über eine am oder im Hausgerät angeordnete Schnittstelle an ein zu mehreren Hausgeräten geführtes, von einem einzigen zentralen Steuerrechner steuerbares Bussystem anschließbar ist, wobei die Schnittstelle mit einem Busanschlußbaustein zur Übertragung von Steuerbefehlen und/oder Sensorsignalen zwischen dem Bussystem und dem Hausgerät verbunden ist, dadurch gekennzeichnet, daß das Hausgerät (14) mit einem Steckplatz (18) zum lösbaren Anstecken des Steuerrechners (17) versehen ist, und daß eine die Verbindung des angesteckten Steuerrechners (17) mit der Schnittstelle (16) herstellende Kontaktanordnung (19) am Steckplatz (18) angeordnet ist.

2. Hausgerät nach Anspruch 1, dadurch gekennzeichnet, daß der Steckplatz (18) als Einsteckschacht ausgebildet ist.

3. Hausgerät nach Anspruch 2, dadurch gekennzeichnet, daß das Schachtende im Innern des Hausgeräts (14) mit der Kontaktanordnung (19) der Schnittstelle versehen ist.

4. Hausgerät nach Anspruch 2 oder 3, dadurch gekennzeichnet, daß eine Schachtabdeckung (21) zum Verschließen des als Einsteckschacht ausgebildeten Steckplatzes (18) bei Abwesenheit des Steuerrechners (17) vorgesehen ist.

5. Hausgerät nach einem der vorhergehenden Ansprüche, dadurch gekennzeichnet, daß ein Adapterkabel zur Verbindung des nicht am Steckplatz (18) angeordneten Steuerrechners (17) mit der Kontaktanordnung (19) am Steckplatz (18) vorgesehen ist.

6. Hausgerät nach einem der vorhergehenden Ansprüche, dadurch gekennzeichnet, daß der wahlweise an verschiedene Hausgeräte (11 - 15) ansteckbare Steuerrechner (17) zur Steuerung aller an das Bussystem (10) angeschlossenen Hausgeräte (11 - 15) ausgebildet ist.

7. Hausgerät nach einem der vorhergehenden Ansprüche, dadurch gekennzeichnet, daß es zusätzlich mit konventionellen Bedienungselementen (20), wie Schalter, Tasten, Drehknöpfen oder dergleichen zur vom Steuerrechner (17) unabhängigen Bedienung versehen ist.

8. Hausgerät nach einem der vorhergehenden Ansprüche, dadurch gekennzeichnet, daß die Kontaktanordnung (19) der Schnittstelle (16) am Steckplatz (18) auch zur Stromversorgung des Steuerrechners (17) ausgebildet ist.

9. Hausgerät nach einem der vorhergehenden Ansprüche, dadurch gekennzeichnet, daß der modular ausgebildete Steuerrechner (17) ein LC-Display (22) und/oder eine insbesondere Funktionstasten aufweisende numerische Tastatur (23) und/oder eine IR-Empfangseinrichtung (24) und/oder eine synthetische Sprachausgabeinrichtung (25) besitzt.

10. Hausgerät nach Anspruch 9, dadurch gekennzeichnet, daß eine IR-Handbedienung (26) zur Steuerung und Kommunikation mit der IR-Empfangseinrichtung (24) vorgesehen ist.

11. Hausgerät nach Anspruch 9 oder 10, dadurch gekennzeichnet, daß der Steuerrechner (17) einen IR-Decoder zur Umsetzung der Signale der IR-Empfangseinrichtung (24) in Bustelegramme enthält.

12. Hausgerät nach einem der vorhergehenden Ansprüche, dadurch gekennzeichnet, daß der Steuerrechner (17) mit einer Einreichung zur Funktionsüberprüfung, Diagnose und/oder Fehlersucher aller an das Bussystem (10) angeschlossenen Hausgeräte (11 - 15) versehen ist.

13. Hausgerät nach einem der vorhergehenden Ansprüche, dadurch gekennzeichnet, daß der Steuerrechner (17) mit einer Speicherbatterie oder einem Speicherkondensator zur Datensicherung bei einem Positionswechsel des Steuerrechners (17) versehen ist.

14. Hausgerät nach einem der vorhergehenden Ansprüche, dadurch gekennzeichnet, daß der Busanschlußbaustein mit Sensoren und/oder Aktoren des Hausgeräts (11 - 15) verbunden ist.

15. Hausgerät nach einem der vorhergehenden Ansprüche, dadurch gekennzeichnet, daß das Bussystem (10) als EIB(European Installation Bus)-Bussystem ausgebildet ist.
